Europäisches Patentamt

European Patent Office

Office européen des brevets

(19)

(11) Veröffentlichungsnummer: **0 096 247**
**B1**

(12) **EUROPÄISCHE PATENTSCHRIFT**

(45) Veröffentlichungstag der Patentschrift:
07.01.88

(51) Int. Cl.⁴: **G 01 N 21/47, B 41 F 33/00**

(21) Anmeldenummer: **83104857.4**

(22) Anmeldetag: **17.05.83**

(54) **Vorrichtung zum betrieblichen Erfassen eines Masses für die Feuchtmittelmenge auf der rotierenden Druckplatte in Offset-Druckmaschinen.**

(30) Priorität: **28.05.82 DE 3220282**

(43) Veröffentlichungstag der Anmeldung:
**21.12.83 Patentblatt 83/51**

(45) Bekanntmachung des Hinweises auf die Patenterteilung:
**07.01.88 Patentblatt 88/1**

(84) Benannte Vertragsstaaten:
**CH FR GB LI SE**

(56) Entgegenhaltungen:
**EP - A - 0 000 689**
**DE - B - 2 214 721**
**FR - A - 2 437 621**
**US - A - 3 439 175**

Die Akte enthält technische Angaben, die nach dem
Eingang der Anmeldung eingereicht wurden und die
nicht in dieser Patentschrift enthalten sind.

(73) Patentinhaber: **grapho metronic Mess- und
Regeltechnik GmbH & Co. KG, Franz-Prüller-Strasse 15,
D-8000 München 80 (DE)**

(72) Erfinder: **Wirz, Burkhardt, Dr.-Ing., Rabenkopfstrasse 41,
D-8000 München 90 (DE)**
Erfinder: **Kammüller, Reiner, Prof. Dr.-Ing., Breslauer
Strasse 4A, D-5901 Wilnsdorf-Obersdorf (DE)**

(74) Vertreter: **Schütz, Peter, Dipl.-Ing. et al, Patentanwälte
Dr. Dieter v. Bezold Dipl.-Ing. Peter Schütz Dipl.-Ing.
Wolfgang Heusler
Maria-Theresia-Strasse 22 Postfach 86 02 60,
D-8000 München 86 (DE)**

## Patentansprüche

Die Erfindung betrifft eine Vorrichtung, wie sie im Oberbegriff des Anspruchs 1 vorausgesetzt ist. Aus der DE-AS 2 214 721 und DE-PS 1 303 819 sind Vorrichtungen mit einer Strahlungsquelle bekannt, welche Strahlungsenergie im Wellenlängenbereich einer Absorptionswellenlänge des Feuchtmittels auf den Messfleck einer Druckplatte abstrahlt. Strahlungsanteile, die vom Messfleck ausserhalb des Reflexionswinkels remittiert werden, gelangen zu einem fotoelektrischen Wandler, der daraufhin erste elektrische Signale an eine Auswerteschaltung zur Bildung eines Wertes für die Feuchtmittelmenge liefert. Neben den Strahlungsimpulsen der Absorptionswellenlänge wird aufgrund weiterer Strahlungsimpulse einer anderen Wellenlänge ein Vergleichssignal gebildet, das von der Dicke der Feuchtigkeitsschicht weitgehend unabhängig ist, und durch Quotientenbildung aus Mess- und Vergleichssignal der unterschiedlichen Wellenlängen wird ein Messwert für die Feuchtmittelmenge gebildet.

Es hat sich jedoch herausgestellt, dass bei bestimmten Feuchtigkeitsmengen das Vergleichssignal nicht konstant ist, sondern aufgrund von Anomalien mit der Feuchtmittelmenge schwankt, so dass bei der Quotientenbildung unzuverlässige Werte für die Feuchtmittelmessung herauskommen. Da man ferner einen möglichst engen Zusammenhang zwischen der Bildung des Messsignals und des Vergleichssignals für notwendig hielt, hat man bei den bekannten Vorrichtungen je Umdrehung des Plattenzylinders mit einem Mess- und einem Vergleichsstrahl gearbeitet, was entweder eine zeitliche Versetzung zwischen Mess- und Vergleichsstrahlimpulsen erfordert und zu einer praktisch nicht realisierbar hohen Impulsfolge bei kleinem Messfleck und hoher Plattenzylinderdrehzahl führt, oder aber man arbeitet mit getrennten Wandlern und unterschiedlichen Vorschaltfiltern für Mess- und Vergleichsstrahl, wobei jedoch die Gefahr von Messverfälschungen aufgrund unterschiedlicher Eigenschaften, Driften etc. der beiden Wandler und ihrer Schaltungen besteht, die durch das Quotientenverfahren nicht ausgeschaltet werden können.

Es wurde bereits erwähnt, dass bei bestimmten Feuchtmittelmengen, wie sie in der Praxis durchaus auftreten können, keine Konstanz oder zumindest Proportionalität der Beeinflussung des Vergleichsstrahls durch die Feuchtmittelschicht herrscht, sondern unerwartet steile Gradienten auftreten, welche eine Auswertung im Quotientenverfahren praktisch unmöglich machen.

Die Aufgabe der Erfindung besteht daher in der Angabe von Massnahmen, zur Erhöhung der Messgenauigkeit durch Verwendung eines von der Feuchtmittelmenge unabhängigen Vergleichsstrahls. Diese Aufgabe wird durch die im Anspruch 1 angegebene Erfindung gelöst.

Durch die Verwendung derselben Wellenlänge für Mess- und Vergleichsstrahl und Messung eines tatsächlich trockenen Messfleckes erhält man einen zuverlässigen Vergleichswert, selbst wenn die Trockenmessung nicht bei jeder Plattenzylinderumdrehung erfolgt, sondern nur dann, wenn die Druckplatte gerade trocken ist. Auch vereinfacht sich die Messvorrichtung erheblich, da keine unterschiedlichen Wellenlängen für Mess- und Vergleichsstrahl benötigt werden und keine unbeherrschbaren Impulsfolgen angewendet werden.

Gemäss der Erfindung ist ein zuverlässiger Wert für die Feuchtmittelmenge messbar, wenn lediglich Strahlungsimpulse im Wellenlängenbereich einer Absorptionswellenlänge auf den Messfleck auf der Druckplatte gerichtet und von ihm diffus remittierte Strahlung aufgefangen wird und die Intensität mit der Intensität eines von Zeit zu Zeit gemessenen und bei jeder möglichen Gelegenheit aufdatierten mit derselben Wellenlänge bestimmten Trockenwertes verglichen wird. Hierzu werden vor Beginn eines Auflagendrucks mit einem Messkopf, der von der Strahlungsquelle Strahlungsimpulse im Wellenlängenbereich einer Absorptionswellenlänge des Feuchtmittels abgibt, diese Impulse zunächst auf denselben aber trockenen Messfleck der Druckplatte gerichtet, und der fotoelektrische Wandler wandelt die dabei auf ihn gelangende remittierte Stahlung ausserhalb des Reflexionswinkels in ein Trockensignal um, das nun in einem Arbeitsspeicher einer Auswerteeinrichtung gespeichert und dem elektrischen Signal des Wandlers während der betrieblichen Messungen auf der feuchten Platte gegenübergestellt wird, woraus in der üblichen Weise, beispielsweise im Quotientenverfahren, ein Mass für die Feuchtmittelmenge abgeleitet werden kann.

Das erfindungsgemässe Vorgehen beruht auf einer von der Anmelderin zumindest für eine Anzahl gängiger Druckplattentypen als mit hinreichender Genauigkeit gültig ermittelten Erkenntnis, wonach die Indikatrices (Vektorfeld der remittierten Strahlungsanteile eines auf einen Messfleck auftreffenden Strahls) für alle Messstellen auf einer Platte im trockenen Zustand und auch für verschiedene Abnutzungszustände geometrisch ähnlich sind und die Indikatrices unter dem Einfluss des Feuchtmittels eine geometrisch ähnliche Verkleinerung erfahren. Zwar unterscheiden sich die Indikatrices trockener Messstellen an verschiedenen Orten auf der Platte ihrer Grösse nach beträchtlich, sie bleiben aber einander ähnlich. So ist es möglich, aus Aufnahmen von Sektoren aus den Indikatrices und damit Bildung räumlicher Integrale im Quotientenverfahren durch Bezug eines über gefeuchteter Messstelle gemessenen Wertes E auf einem gespeicherten Trockenwert $E_{tr}$ ein Mass $E^{*'}$ für die Feuchtmittelmenge nach der Beziehung

$$E^{*'} = \frac{E}{E_{tr}}$$

zu gewinnen. Dieser Wert $E^{*'}$ entspricht einer definierten Feuchtmittelmenge.

Es steht ausser Frage, dass die derart aufgebaute Vorrichtung wesentlich einfacher ist und überdies die Feuchtmittelmenge auf die Vergleichsgrösse keinen Einfluss mehr haben kann.

Ist die Konstanz der von der Strahlungsquelle in der Messwellenlänge abgegebenen Signale nicht gut genug, so kann die Auswertung gemäss einer Weiterbildung der Erfindung mit auf ein Referenzsignal bezogenen Werten erfolgen, wobei ein zweiter fotoelektrischer Wandler von der Strahlungsquelle Strahlungsimpulse unmittelbar, d.h. ohne Umweg über die Druckplatte, empfängt, und sein Ausgangswert als Referenzsignal jeweils im Quotientenverfahren dem entsprechenden Ausgangssignal des ersten fotoelektrischen Wandlers gegenübergestellt wird und die Verknüpfung zur Ableitung des Wertes für die Feuchtmittelmenge dann mit diesen bezogenen Werten erfolgt.

Zur Berücksichtigung einer vorrichtungsimmanenten Verfälschungsgrösse wie des Übersprechens oder eines durch die Oberfläche der Feuchtmittelschicht bedingten Glanzanteils genügt es, mit derselben Vorrichtung und derselben Impulsstrahlungswellenlänge in an sich bekannter Weise vor Beginn des Auflagendrucks und gegebenenfalls in Druckpausen, in denen der Trockenwert aufdatiert wird, Übersprech- und Glanzsignale aufzunehmen und gleich dem Trokkensignal zu speichern und bei der Auswertung der betrieblich aufgenommenen Messsignale einzubeziehen. Auch hierbei kann man diese Signale auf entsprechende Referenzsignale beziehen.

Die Aufnahme der vom Messfleck diffus remittierten Strahlung kann mit Hilfe einer den Messfleck auf den ersten fotoelektrischen Wandler abbildenden Optik geschehen, die vorzugsweise eine elliptisch gekrümmte Spiegelfläche ist, deren erster Brennpunkt mit dem Messfleck und deren zweiter Brennpunkt mit dem fotoelektrischen Wandler zusammenfallen. Die dadurch erzielte Ausbeute ermöglicht auch bei extrem kurzen Strahlungsimpulsen einen ausreichenden Signal/Rausch-Abstand, so dass Messverfälschungen durch äussere Störungen ausgeschlossen werden können.

Beeinflussungen der Messung durch eine die Messapparatur gegen Papierstaub, Farbe u.ä. abschliessende Trennscheibe im Strahlungsein- und -austrittsfenster des Messkopfes werden dadurch vermieden, dass die Trennscheibe zumindest für den Wellenlängenbereich der Messstrahlung entspiegelt wird.

Nachfolgend wird ein Ausführungsbeispiel der Erfindung anhand der Zeichnung näher erläutert. Es zeigen:

Fig. 1 eine Prinzipskizze des Einsatzes einer erfindungsgemässen Feuchtmittelschichtdicken-Messvorrichtung am Plattenzylinder einer Rotations-Offsetdruckmaschine;

Fig. 2 eine prinzipiele Darstellung des Messkopfes über der Druckplatte im Längsschnitt;

Fig. 3 ein schematisiertes Schaltbild der Auswerteschaltung;

Fig. 4 das Prinzipbild der Auswerteschaltung in besonders reduzierter Ausbildung.

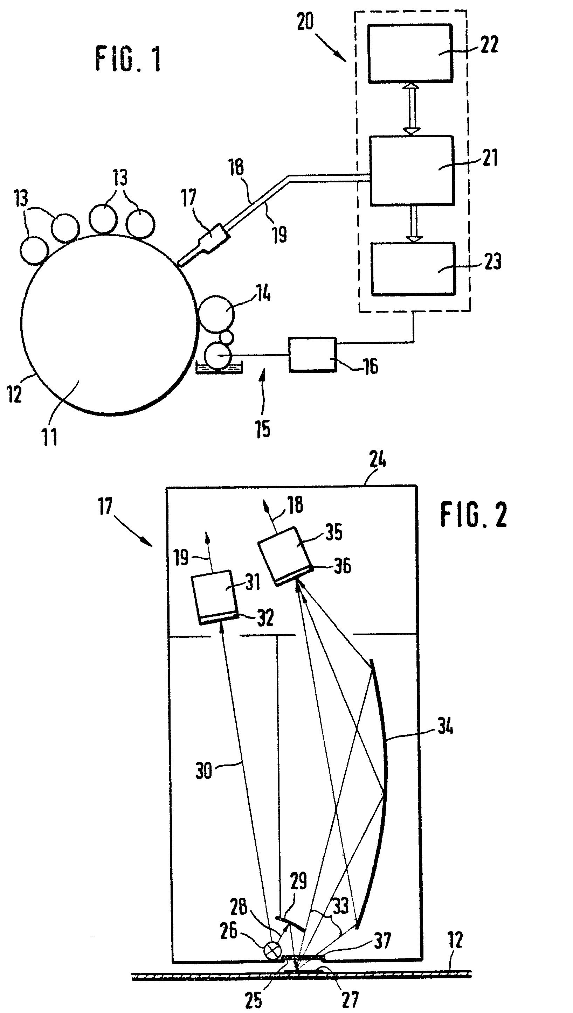

Figur 1 zeigt schematisiert von einem allgemein bekannten und deshalb nicht insgesamt dargestellten Druckwerk einer Offset-Rotationsdruckmaschine den Plattenzylinder 11, auf den in üblicher Weise eine Druckplatte 12 aufgezogen ist. Auf der Druckplatte 12 wälzen sich Farbauftragwalzen 13 eines (nicht vollständig gezeigten) Farbwerkes sowie eine Feuchtauftragwalze 14 eines insgesamt mit 15 bezeichneten, schematisierten Feuchtwerkes ab, das zur Feuchtmittelmengenverstellung im vorliegenden Fall mit einem drehzahlstellbaren Motor 16 ausgestattet ist.

Mit geringem Abstand über der Druckplatte 12 ist in der Druckmaschine, vorzugsweise in Richtung parallel zur Achse des Plattenzylinders 11 traversierend verschiebbar, ein Messkopf 17 angebracht, der mittels zweier Verbindungsleitungen 18, 19 mit einer in ihrer Gesamtheit durch einen gestrichelten Rahmen umgebenen Auswerteschaltung 20 verbunden ist.

Diese Auswerteschaltung 20 enthält eine Rechnereinheit 21, einen Arbeitsspeicher 22 und eine Anzeige 23, auf der die gemessene Feuchtmittelmenge in geeigneter Form angezeigt wird.

In der Figur 2 ist vereinfacht ein Längsschnitt durch den Messkopf 17 wiedergegeben. Der Längsschnitt ist in eine Radialebene des Plattenzylinders 11 gelegt. Innerhalb eines dicht schliessenden Gehäuses 24 des Messkopfes 17, das lediglich eine Lichtein- und -austrittsöffnung 25 an seinem unteren, der Druckplatte 12 gegenüberstehenden Ende hat, ist eine Impulslichtquelle 26 angebracht, die auf hier nicht näher interessierende Weise synchron mit dem Vorbeilauf eines Messflecks 27 auf der Druckplatte 12 angesteuert wird und einen Lichtimpuls abgibt, von dem ein Teil als Messstrahl 28 über einen Spiegel 29 auf den Messfleck 27 und ein weiterer Teil als Referenzstrahl 30 unmittelbar auf einen Referenzdetektor 31 mit vorgeschaltetem Filter 32 gerichtet wird. Das Filter 32 besitzt ein Durchlassband von einer Wellenlänge, die der Messwellenlänge entspricht und, wie an sich bekannt, eine Absorptionswellenlänge des Feuchtmittels oder eine bewusst danebenliegende Wellenlänge sein kann.

Ein ausserhalb des Reflexionswinkels des auf den Messfleck 27 gerichteten Messstrahls 28 gelegener remittierter Strahlungsanteil 33 tritt in die Öffnung 25 des Gehäuses 24 des Messkopfes 17 ein und wird von einem Spiegel 34 auf einem weiteren photoelektrischen Messwandler 35 konzentriert, dem ebenfalls ein Filter 36 vorgeschaltet ist, welches das gleiche Durchlassband wie das Filter 32 hat. Der Spiegel 34 ist als Ellipsenspiegel ausgebildet und derart angeordnet, dass der erste Brennpunkt der Ellipse in den Messfleck 27 und der zweite Brennpunkt auf die empfindliche Oberfläche des Messdetektors 35 fällt. Es wird mit dieser optischen Anordnung eine vorzügliche Ausbeute der innerhalb eines bestimmten Remissionswinkels vom Messfleck 27 remittierten Strahlung erzielt. Eine die Öffnung 25 überdeckende, für Mess- und Remissionsstrahlung durchlässige Trennscheibe 37 ist zumindest für diese Strahlung entspiegelt, so dass ihr keinerlei den Messvorgang beeinflussende optische Eigenschaften anhaften.

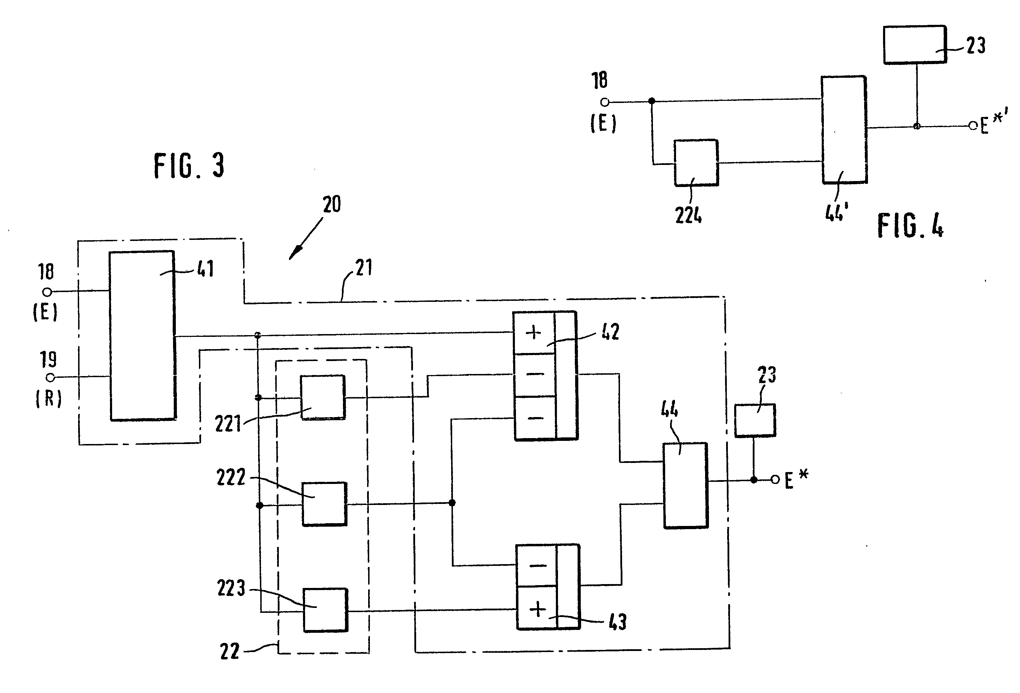

Die Auswerteschaltung, die in der Figur 3 näher dargestellt ist, enthält in ihrem Rechnerabschnitt 21 einen Dividierer 41, Addierer/Substrahierer 42 und 43 und einen weiteren, letzteren nachgeschalteten Dividierer 44 und ist mit einem Arbeitsspeicher 22 verbunden, der aus den Teilspeichern 221 für das bezogene Glanzsignal $E_G/R_G$, 222 für das bezogene Übersprechsignal $E_ü/R_ü$ und 223 für das bezogene Trockensignal $E_{tr}/R_{tr}$ zusammengesetzt ist. Auf die Art und Weise der Ansteuerung für die Aufnahme der bezogenen Werte in die jeweiligen Speicher und ihre Abgabe in den Rechenvorgang wird hier nicht näher eingegangen, da derartige Massnahmen dem zuständigen Fachmann vertraut sind.

Am Ausgang des Dividierers 44 kann der das Mass für die Feuchtmittelmenge $E^*$ darstellende Wert, z.B. zur Steuerung des Feuchtwerkes der Druckmaschine abgenommen werden, und er wird auch der Anzeigevorrichtung 23 zugeleitet.

Die Arbeitsweise der Messvorrichtung ist folgende. Bei über einen Messfleck 27 der trockenen Druckplatte gestelltem Messkopf 17 werden von der Strahlungsquelle 26 Strahlungsimpulse ausgesandt, die am Ausgang des Messdetektors 35 elektrische Impulse $E_{tr}$ und am Ausgang des Referenzdetektors 31 elektrische Impulse $R_{tr}$ erzeugen, welche über die Leitungen 18 und 19 der Auswerteschaltung 20 zugeleitet und dort nach Bildung des bezogenen Wertes $E_{tr}/R_{tr}$ im Dividierer 41 für den anschliessenden Auflagendruck im Arbeitsspeicher 223 gespeichert werden. Ferner kann die Druckplatte mit Feuchtmittelüberschuss versehen werden, wobei die dann aufgenommenen und von den Detektoren 35 und 31 abgegebenen Signale das Glanzsignal $E_G$ bzw. das Referenzglanzsignal $R_G$ sind, die ebenfalls nach Bildung des bezogenen Wertes $E_G/R_G$ im Dividierer 41 im Arbeitsspeicher 221 gespeichert werden. Schliesslich können Übersprechsignale aufgenommen werden, indem anstelle des Messflecks 27 ausserhalb der Maschine ein schwarzer Körper untergelegt wird, wodurch nicht ausschaltbare, messkopfimmanente Grössen $E_ü$ und $R_ü$ aufgenommen werden, die nach Bildung des bezogenen Wertes $E_ü/R_ü$ im Dividierer 41 im Arbeitsspeicher 222 abgespeichert und bei den nachfolgenden betrieblichen Messungen berücksichtigt werden.

Die eigentliche Feuchtmittelmengenmessung erfolgt im Betrieb der Druckmaschine mit vom Feuchtwerk 15 über die Feuchtmittelauftragwalze 14 gefeuchteter Platte, wobei mit Hilfe einer hier nicht näher zu erläuternden, für den Fachmann selbstverständlichen Synchronisierung die Strahlungsquelle 26 derart angesteuert wird, dass bei jeder einzelnen Plattenzylinderumdrehung oder auch nach mehreren ein Strahlungsblitz abgegeben und ein Messstrahl 28 auf den Messfleck 27 gerichtet wird. Die dabei vom Mess- und Referenzdetektor 35 bzw. 31 abgegebenen Signale E und R werden in der Rechnereinheit 21 der Auswerteschaltung 20 bei der umfassendsten Form der Berücksichtigung aller vorstehend genannten und zuvor aufgenommenen und gespeicherten Grössen nach folgender Gleichung zu einem Mass für die Feuchtmittelmenge $E^*$ verarbeitet.

$$E^* = \frac{E/R - E_ü/R_ü - E_G/R_G}{E_{tr}/R_{tr} - E_ü/R_ü}$$

Wegen der Einfachheit des Berechnungsvorgangs wird von der Darstellung des Rechenablaufs in Gestalt eines Flussdiagramms abgesehen.

Vereinfachende Näherungswerte werden erzielt, indem die Glanzwerte $E_G$ und $R_G$ unberücksichtigt bleiben, der Einfluss des Übersprechens $E_ü$ und $R_ü$ vernachlässigt wird oder auch, sofern möglich, die Strahlungsquelle als absolut konstant angenommen wird, so dass dann in gröbster Näherung ein Mass für die Feuchtmittelmenge $E^{*\prime} = E/E_{tr}$ erhalten wird. Zur Auswertung der Messung nach vorstehender Gleichung genügt eine Rechnerschaltung gemäss Figur 4, die nur einen Speicher 224 für das Signal des Messdetektors 35 vom Messfleck bei trockener Platte und einen Dividierer 44' enthält, an dessen Ausgang der Wert $E^{*\prime}$ auftritt.

Die voranstehenden Erläuterungen zeigen die Überlegenheit der erfindungsgemässe Vorrichtung gegenüber dem Stand der Technik allein aufgrund ihrer wesentlichen technischen Vereinfachung und lassen erkennen, dass der durch das Feuchtmittel beeinflusste Messwert auf den wenigstens zeitweise als konstant anzusehenden Trockenwert, welcher sich nur geringfügig mit dem Druckplatten-Abnützungsgrad verändert und deshalb während des Druckens durch wiederholte Trockenmessungen in Druckpausen stets aufdatiert wird, und nicht auf einen ebenfalls durch das Feuchtmittel beeinflussten Vergleichswert bezogen wird, um die Menge des Feuchtmittels zu bestimmen.

**Patentansprüche**

1. Vorrichtung zum betrieblichen Erfassen eines Masses für die Feuchtmittelmenge auf einem Messfleck auf einer rotierenden Druckplatte (12) in Offset-Druckmaschinen mit einer Strahlungsimpulse im Wellenlängenbereich einer Absorptionswellenlänge des Feuchtmittels auf den Messfleck (27) auf der Druckplatte abstrahlenden Quelle (26, 29), einem ersten fotoelektrischen Wandler (35), der ausserhalb des Reflexionswinkels remittierte Strahlung von auf den Messfleck aufgestrahlten Strahlungsimpulsen aufnimmt und quantitativ in elektrische Signale umwandelt, wobei in einem Messvorgang bei feuchter Druckplatte erste Signale (E) und in einem anderen Messvorgang vom Feuchtigkeitsgrad unbeeinflusste zweite Signale ($E_{tr}$) erzeugt werden, und mit einer Auswertschaltung (20) und einem Arbeitsspeicher (22), mit denen durch quantitative Gegenüberstellung der ersten und zweiten Signale das Mass für die Feuchtmittelmenge ableitbar ist, dadurch gekennzeichnet, dass die zweiten Signale ($E_{tr}$) durch Messung von einem tatsächlich trockenen Messfleck remittierter Strahlungsimpulse derselben Absorptionswellenlänge abgeleitet sind.

2. Vorrichtung nach Anspruch 1, dadurch gekennzeichnet, dass ein zweiter fotoelektrischer Wandler (31) vorgesehen ist, der gleichzeitig mit dem ersten fotoelektrischen Wandler (35) Strahlungsimpulse derselben Wellenlänge von der Strahlungsquelle (26) direkt empfängt und bei der Feucht- und Trockenmessung jeweils ein Referenzsignal (R, $R_{tr}$) bildet, die im Arbeitsspeicher (22) speicherbar sind und dass bei der Bildung des Feuchtmittelmengewertes jedes Messsignal (E, $E_{tr}$) auf sein zugehöriges zeitgleiches Referenzsignal (R, $R_{tr}$) bezogen verknüpfbar ist.

3. Vorrichtung nach Anspruch 1 oder 2, dadurch gekennzeichnet, dass im Arbeitsspeicher (22) ein Übersprechsignal ($E_ü$) speicherbar ist und vor der quantitativen Gegenüberstellung von den ersten und zweiten elektrischen Signalen (E bzw. $E_{tr}$) abziehbar ist, wobei gegebenenfalls alle Signale auf ihre Referenzsignale (R, $R_{tr}$, $R_ü$) bezogen sind.

4. Vorrichtung nach Anspruch 1, 2 oder 3, dadurch gekennzeichnet, dass im Arbeitsspeicher (22) ein vom ersten fotoelektrischen Wandler (35) bei Feuchtmittelüberschuss auf dem Messfleck (27) der Druckplatte (12) abgegebenes Glanzsignal ($E_G$) speicherbar und vor der quantitativen Gegenüberstellung von den ersten elektrischen Signalen (E) abziehbar ist, wobei die Signale gegebenenfalls auf ihre Referenzsignale ($R_G$, R) bezogen sind.

5. Vorrichtung nach einem der Ansprüche 1 bis 4, dadurch gekennzeichnet, dass die den Messfleck (27) auf dem ersten fotoelektrischen Wandler (35) abbildende Optik eine elliptisch gekrümmte Spiegelfläche (34) aufweist, deren erster Brennpunkt mit dem Messfleck (27) und deren zweiter Brennpunkt mit dem ersten fotoelektrischen Wandler (35) zusammenfallen.

6. Vorrichtung nach einem der Ansprüche 1 bis 5, dadurch gekennzeichnet, dass eine zwischen dem Messfleck (27) auf der Druckplatte (12) und der Strahlungsquelle (26), der abbildenden Optik (34) und dem fotoelektrischen Wandler (35) angeordnete strahlungsdurchlässige Trennscheibe (37) für den Wellenlängenbereich der Messstrahlung entspiegelt ist.

**Claims**

1. Apparatus for the operational determination of a value for the amount of wetting agent on a measuring area on a rotating printing plate (12) in offset printing machines including a source (26, 29) emitting radiation impulses in the wavelength range of an absorption wavelength of the wetting agent on the measuring area (27) on the printing plate, a first photoelectric transducer (35) which receives radiation retransmitted outside the angle of reflection of radiation impulses incident on the measuring area and quantitatively converts them into electric signals, whereby first signals (E) are produced in one measuring process with a moist printing plate and second signals ($E_{tr}$) unaffected by the degree of wetting are produced in a further measuring process, and including an evaluating circuit (20) and a working store (22) with which the value for the amount of wetting agent is derivable by quantitative comparison of the first and second signals, characterised in that the second signals ($E_{tr}$) are derived by measurement of radiation impulses of the same absorption wavelength retransmitted from an actually dry measuring area.

2. Apparatus as claimed in claim 1, characterised in that a second photoelectric transducer (31) is provided which simultaneously with the first photoelectric transducer (35) directly receives radiation impulses of the same wavelength from the radiation source (26) and in the moist and dry measurement forms a respective reference signal (R, $R_{tr}$) which may be stored in the working store (22) and that in the formation of the value of the amount of wetting agent each measurement signal (E, $E_{tr}$) is combinable relative to its associated simultaneous reference signal (R, $R_{tr}$).

3. Apparatus as claimed in claim 1 or 2, characterised in that a cross-coupling signal ($E_u$) may be stored in the working store (22) and may be subtracted, before the quantitative comparison, from the first and second electric signals (E, $E_{tr}$), whereby all signals are optionally related to their reference signals (R, $R_{tr}$, $R_u$).

4. Apparatus as claimed in claim 1, 2 or 3, characterised in that a brightness signal ($E_G$) produced by the first photoelectric transducer (35) when there is an excess of wetting agent on the measuring area (27) of the printing plate (12) may be stored in the working store (22) and subtracted, before the quantitative comparison, from the first electric signals (E), whereby the signals are optionally related to their reference signals ($R_G$, R).

5. Apparatus as claimed in one of claims 1 to 4, characterised in that the optical system which forms an image of the measuring area (27) on the first photoelectric transducer (35) has an elliptically curved mirror surface (34) whose first focal point coincides with the measuring surface (27) and whose second focal point coincides with the first photoelectric transducer (35).

6. Apparatus as claimed in one of claims 1 to 5, characterised in that a radiation translucent separating disc (37) situated between the measuring area (27) on the printing plate (12) and the radiation source (26), the image-forming optical system (34) and the photoelectric transducer (35) is non-reflective for the wavelength range of the measurement radiation.

**Revendications**

1. Dispositif pour la détermination, en cours de travail, d'une mesure de la quantité d'agent humidifiant sur une tache de mesure sur un cliché (12) en rotation dans les machines d'impression offset, au moyen d'une impulsion de rayonnement dans le domaine des longueurs d'ondes comprenant une longueur d'onde d'absorption de l'agent humidifiant sur la tache de mesure (27), des sources (26, 29) émettant un rayonnement vers le cliché, un premier convertisseur photoélectrique (35) qui capte le rayonnement rétrodiffusé hors de l'angle de réflexion des impulsions de rayonnement émises vers la tache de mesure et qui le convertit quantitativement en signaux électriques, tandis qu'une opération de mesure sur un cliché humide engendre une première série de signaux (E) et qu'une autre opération de mesure non influencée par le taux d'humidité engendre une deuxième série de signaux (Etr), la mesure du taux d'humidité pouvant être déduite au moyen d'un circuit (20) de traitement des signaux et d'une mémoire de travail (22) par comparaison quantitative des premiers signaux et des deuxièmes signaux, caractérisé en ce que les deuxièmes signaux (Etr) sont obtenus à partir de la mesure des impulsions de rayonnement de la même longueur d'onde d'absorption rétrodiffusées par une tache de mesure effectivement sèche.

2. Dispositif selon la revendication 1, caractérisé en ce qu'il est prévu un deuxième convertisseur photoélectrique (31) qui reçoit directement de la source de rayonnement (26), en même temps que le premier convertisseur photoélectrique (35), des impulsions de rayonnement de la même longueur d'onde, et produit chaque fois, lors des mesures humides et des mesures à sec, un signal de référence (R, Rtr) pouvant être stocké dans la mémoire de travail (22), et en ce que, lors de l'établissement des valeurs indiquant la quantité d'agent humidifiant, chaque signal de mesure (E, Etr) est susceptible d'être combiné avec son signal de référence simultané respectif (R, Rtr).

3. Dispositif selon la revendication 1 ou 2, caractérisé en ce qu'un signal superposé (Eü) est susceptible d'être stocké dans la mémoire de travail et d'être extrait avant la combinaison quantitative des premiers et des deuxièmes signaux électriques (E, Etr) tous les signaux étant, le cas échéant, comparés à leurs signaux de référence (R, Rtr, Rü).

4. Dispositif selon l'une des revendications 1, 2 ou 3, caractérisé en ce qu'il est prévu de stocker dans la mémoire de travail (22) un signal de brilliance ($E_G$) fourni par le premier convertisseur photoélectrique (35) en cas d'excès d'agent humidifiant sur la tache de mesure (27) du cliché (12), ce signal étant déductible avant la comparaison quantitative des premiers signaux électriques (E), ces signaux étant le cas échéant combinés avec leurs signaux de référence ($R_G$, R).

5. Dispositif selon une des revendications 1 à 4, caractérisé en ce que l'optique formant une image de la tache de mesure (27) sur le premier convertisseur photoélectrique (35) présente une surface réfléchissante (34) à courbure elliptique dont le premier foyer coïncide avec la tache de mesure (27) et dont le deuxième foyer coïncide avec le premier convertisseur photoélectrique (35).

6. Dispositif selon une des revendications 1 à 5, caractérisé en ce qu'une lentille séparatrice (37) transparente au rayonnement, disposée entre la tache de mesure (27) sur le cliché (12) et la source de rayonnement (26), ainsi qu'entre l'optique formant l'image (34) et le convertisseur photoélectrique (35), est anti-réfléchissante pour le domaine de longueurs d'ondes du rayonnement utilisé pour la mesure.

FIG. 1

FIG. 2

FIG. 3

FIG. 4

0 096 247